# EUROPEAN PATENT SPECIFICATION

(11) **EP 3 485 228 B1**
(45) Date of publication and mention of the grant of the patent: **02.12.2020**
(21) Application number: 17740218.7
(22) Date of filing: 03.07.2017
(51) Int. Cl.: G01C 21/36

(54) **POINT OF INTEREST IDENTIFICATION BASED ON POLYLINE ROUTE AND PROGRESS ALONG ROUTE**
IDENTIFIZIERUNG EINES PUNKTS VON INTERESSE AUF BASIS EINER POLYLINIENROUTE UND DES VERLAUFS ENTLANG EINER ROUTE
IDENTIFICATION DE POINT D'INTÉRÊT SUR LA BASE D'ITINÉRAIRE EN POLYLIGNES ET DE PROGRESSION LE LONG DE L'ITINÉRAIRE

(30) Priority: 15.07.2016 US 201615211175
(43) Date of publication of application: 22.05.2019
(73) Proprietor: Microsoft Technology Licensing, LLC, Redmond, Washington 98052-6399 (US)
(72) Inventor: ANDREW, Felix Gerard Torquil Ifor, Redmond, Washington 98052-6399 (US)
(74) Representative: CMS Cameron McKenna Nabarro Olswang LLP
(86) International application number: PCT/US2017/040573
(87) International publication number: WO 2018/013379

(56) References cited:
- US-A1- 2010 305 842
- US-A1- 2011 313 657
- US-A1- 2016 061 617

## Description

### BACKGROUND

Computing systems are currently in wide use. Some such computing systems include mapping systems. Mapping systems allow a user to perform mapping functionality, such as to provide a destination and receive directions, view a display of a map given a desired location, among other things.

The mapping systems can also operate on a user device, or they can include a client component of a remote mapping service, that interacts with the remote mapping service. Both the client component and the remote mapping service can be used to perform the mapping functions on the user device.

Some mapping systems also display points of interest to a user. The points of interest can be user-defined points of interest (such as a user's favorite grocery store, coffee shop, restaurant, gas station, etc.) or the points of interest can be defined in other ways (such as well-known landmarks, etc.). The points of interest are often arranged in categories, such as hotels, restaurants, bakeries, gas stations, among a wide variety of other categories. Within each of these categories, there may be multiple points of interest that can be displayed to the user, on the particular map display that is being displayed by the mapping system.

In some such systems, the number of points of interest that could be shown to a given user may be relatively large. If all the points of interest that reside on the particular map display being shown, were displayed, this would swamp the control surface of the map display. Therefore, map systems often limit the number of points of interest shown to a specific number, per category (such as ten hotels, ten bakeries, five gas stations, etc.). The number of points of interest that are displayed may also depend on the particular display device being used, the zoom level of the map display, or on other criteria.

Users often use map systems in a number of different ways. For instance, it may be that a user is driving from a starting point to an ending point that are separated by several hundred miles, and the trip may take several hours. However, it may also be that the user is driving from a starting point to an ending point that are only ten miles apart. Further, the user may be using the map display while traveling on a mass transit system, or while walking or jogging, while riding a bicycle, or using other modes of travel. In such systems, the users often input an end point that is not just a geographic location but is a particular destination. For instance, the end point on a user's route may be a particular restaurant, hotel, theater, etc.

The discussion above is merely provided for general background information and is not intended to be used as an aid in determining the scope of the claimed subject matter.

US20160061617A1 describes systems and methods for providing search results. A route offset may be determined, where the route offset at least in part defines a search area for a route. A search result may be received from a point-of-interest (POI) search within the search area. The search result may include a set of POIs associated with a POI category. The set of POIs in the search result may be ranked based at least in part on route disruption criteria. The route disruption criteria for a given one of the POIs may measure additional travel if the route is changed to include the given POI. One or more of the ranked set of POIs may be presented. A selection of the POI category and a mode of transportation for the route may be received. The mode of transportation may include one of driving, bicycling, traveling by public transportation, or walking.

US20110313657A1 describes methods, systems, and apparatus, including computer programs encoded on one or more computer storage devices, for context sensitive point of interest retrieval. In one aspect, a method includes receiving a current location of a user's electronic device and retrieving multiple points of interest within a predetermined distance to the current location. Each point of interest is ranked based on the point of interest's proximity to the current location and one or more time-related attributes associated with the point of interest. Data identifying one or more of the points of interest is provided to the electronic device for presentation to the user on a display of the electronic device based on the ranking.

US20100305842A1 describes an apparatus and a method to display Points-of-Interest (POIs) in a navigation system. More specifically, the navigation-based apparatus and method adapted to filter redundant POIs and display only the POIs closest to the route. In one aspect, the POI display apparatus in the navigation system includes a user interface to display maps and POI information, an information receiver adapted to receive a current location of a user, at least one database to store maps, road networks and POI information, a route generating unit to retrieve the map and road network data from the database and generate a calculated route, a POI searching unit to search POIs in a predetermined searching range and searching distance and a POI filtering unit to divide the POIs discovered by the searching unit into different categories, group the POIs with the same names in each category and sort the POIs in each group according to the distance from the calculated route. In one embodiment, the POI information can be transmitted to the navigation from a remote server or communication networks.

### SUMMARY

According to the aspect of the present invention, there is provided a system and method as defined in the accompanying claims.

A map system detects a plurality of point of interest (POI) selection/ranking criteria and identifies and ranks (or assigns a prominence value to) (POI) categories based upon the criteria. It then identifies and ranks (or assigns a prominence value to) particular points of interest based on the criteria. The identified, particular points of interest are then surfaced on the map display.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a block diagram of one example of a computing system architecture.
FIG. 2 is a flow diagram illustrating one example of the operation of the map system and point of interest system shown in FIG. 1, in surfacing points of interest on a map display.
FIG. 3 is a flow diagram illustrating one example of identifying and ranking point of interest categories and particular points of interest, based on detected criteria.
FIG. 4 is a block diagram showing the computing system architecture illustrated in FIG. 1, but deployed in a cloud computing architecture.
FIGS. 5-7 show examples of mobile devices that can be used in the architectures shown in the previous figures.
FIG. 8 is a block diagram showing one example of a computing environment that can be used in the architectures shown in the previous figures.

### DETAILED DESCRIPTION

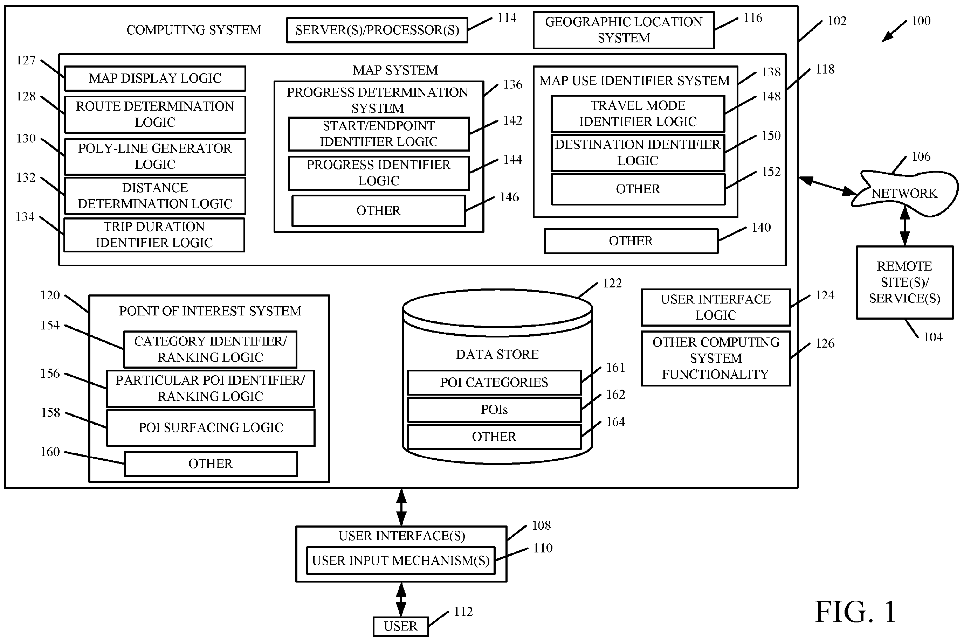

FIG. 1 is a block diagram of one example of a computing system architecture 100. Architecture 100 illustratively includes computing system 102 that can communicate with one or more remote sites or services 104 over a network 106. Network 106 can be a wide area network, a local area network, a cellular network, a near field communication network, or any of a wide variety of other networks. FIG. 1 also shows that computing system 102 is illustratively generating user interfaces 108 with user input mechanisms 110 for interaction by user 112. User 112 illustratively interacts with user input mechanisms 110 in order to control and manipulate computing system 102.

It will be noted that in some examples, parts or all of the functionality discussed below with respect to system 102 can be located and performed in a remote site or service 104 and sent to a client device running system 102. However, the present discussion proceeds with respect to its being performed in system 102, but this is for the sake of example only.

In the example shown in FIG. 1, computing system 102 includes one or more processors or servers 114, geographic location system 116, map system 118, point of interest (or POI) system 120, data store 122, user interface logic 124, and it can include a wide variety of other computing system functionality 126. Map system 118, itself, can include map display logic 127, route determination logic 128, polyline generator logic 130, distance determination logic 132, trip duration identifier logic 134, progress determination system 136, map use identifier system 138, and it can include other items 140. Progress determination system 136, itself, can include start/end point identifier logic 142, progress identifier logic 144, and it can include other items 146. Map use identifier system 138, itself, can include travel mode identifier logic 148, destination identifier logic 150, and it can include a wide variety of other items 152.

POI system 120 illustratively includes category identifier/ranking logic 154, particular POI identifier/ranking logic 156, and POI surfacing logic 158. It can include other items 160 as well.

In the example shown in FIG. 1, data store 122 is shown storing POI categories 161, which can include points of interest 162 and it can store a wide variety of other items 164. It will be noted that POI categories 161 and POIs 162 and other items 164 can be indexed, based on a wide variety of indexing criteria, and the index can be included in data store 122, or elsewhere, as well. Before describing the overall operation of architecture 100 in surfacing points of interest for user 112, a brief description of some of the items in architecture 100, and their operation, will first be provided, some of which are described below.

Geographic location system 116 illustratively identifies a geographic location of computing system 102. It can, for instance, be a GPS receiver, or a wide variety of other geographic location systems.

Map system 118 illustratively allows user 112 to perform mapping functionality on computing system 102. For instance, it can allow the user to enter a starting point, and a destination, and map display logic 127 can generate and display a map display including route information. It can also simply display a map surrounding the user's current location, based upon the geographic location identified by system 116, or based on another location. It can plot a user's movement, etc.

Route determination logic 128 can identify a route for a user to take from a starting point to an ending point. Polyline generator logic 130 can generate a polyline indicative of that route. Distance determination logic 132 can identify a distance from the starting point to the ending point, along the route. In addition, it can identify a user's current location along the route, and identify how far the user has traveled and how far the user has yet to travel. It can also determine how far various POIs are off the route. Trip duration identifier logic 134 can generate an estimate of the trip duration, based upon the user's mode of travel, a value indicative of how fast the user is traveling, etc.

Progress determination system 136 can identify where the user is in the trip identified by the route, and generate a progress value indicative of the user's progress. For instance, start/end point identifier logic 142 can identify the starting and ending points of the user's trip, given the user's route. Progress identifier logic 144 can obtain the user's current location on that route, and use distance determination logic 132 to determine how much progress the user has made in traveling along the route. It can also use trip duration identifier logic 134. For instance, it can identify that the user has traveled ten miles on a 50 mile route, and that the user is ten minutes into a trip that will last approximately one hour. Of course, these are examples only and progress identifier logic 144 can generate a progress value to identify progress in other ways as well.

Map use identifier system 138 illustratively identifies how the user is currently using map system 118. For instance, travel mode identifier logic 148 can identify the travel mode that the user is using (or can estimate it). For instance, it can identify the speed with which user 112 is traveling and determine that the user must be driving a car, walking, riding a bicycle, running, etc., based upon that speed and also based upon the particular route. By way of example, if the user is moving along a highway at 50 miles per hour, then travel mode identifier logic 148 will identify that the user is likely in a motor vehicle. If the user is following a particular bus route or subway route or train route, etc., it may identify that the user is using a form of mass transportation. These are examples only.

Destination identifier logic 150 illustratively identifies the particular type of destination (as opposed to just the geographic location or address of the end point of the route). For instance, it may be that the user's destination is a hotel, a restaurant, a theater, etc. Logic 150 generates a value indicative of the user's destination. All of these, and other values, detected by map system 118 can be provided to point of interest system 120 so that point of interest system 120 can surface relevant points of interest for user 112, based upon all the detected criteria. A number of scenarios will now be discussed, but they are only examples of the kinds of information that can be used to identify and surface points of interest.

In one example, system 120 can surface points of interest based upon their distance from the route that is determined by route determination logic 128, based upon how long the user has been traveling and the progress the user has made along the route, based upon how the user is using the mapping system, and based upon other items. For instance, if the user is traveling 50 miles, it may not be useful to display a hotel or gas station to a user that is 100 miles away. Further, if the user is only 20 minutes into a five hour trip, it may not be helpful to display coffee shops to the user. However, if the user is three hours into a five hour trip, and it is approximately lunchtime, then it may be more useful to surface restaurants, coffee shops, etc., for the user. In addition, if destination identifier logic 150 identifies that the user's destination is a restaurant, then it may not be useful to surface other restaurants for the user, but it may be useful to surface a coffee shop or a theater for the user that is close to the user's end point, or destination. These are examples only and a wide variety of other criteria can be used to surface points of interest for the user.

In the example shown in FIG. 1, category identifier/ranking logic 154 uses the detected criteria to identify which particular categories of points of interest will be most relevant to the user. Again, assuming that the user's destination is a restaurant, then surfacing points of interest in the restaurant category may not be helpful, because the user has already chosen a restaurant as his or her destination.

Once the relevant categories have been identified and ranked by logic 154, then particular point of interest identifier/ranking logic 156 can identify the particular points of interest, in the relevant categories, that are most relevant to the user. By way of example, assuming that the user's destination is a movie theater, then it may be that points of interest in the restaurant category are relevant. It may also be that, based upon the time of day, the user may wish to attend a restaurant after viewing a movie at the movie theater. Therefore, particular POI identifier/ranking logic 156 may identify particular restaurants that are close by the user's destination location as being particularly relevant. Again, this is by way of example only and identifying and ranking particular points of interest using logic 156 can be done in a wide variety of other ways as well.

Once the particular points of interest have been identified and ranked, then the top n particular points of interest can be surfaced for the user by POI surfacing logic 158. In one example, it can provide them to map system 118, which generates the map display, showing the particular points of interest and identifying how far they are from the user's route (as indicated by the polyline on the display), or from the user's start point, or from the user's end point, etc. Some of these examples are described in greater detail below.

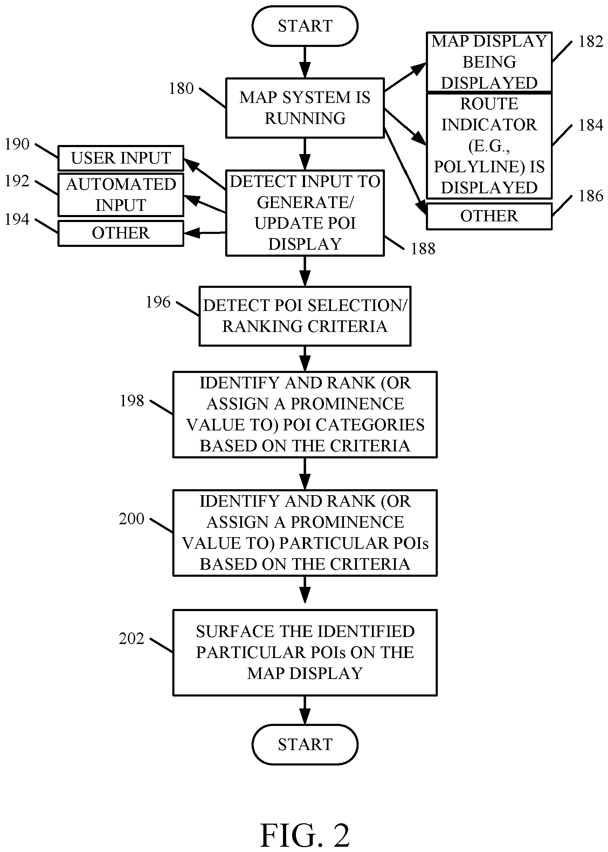

FIG. 2 is a flow diagram illustrating one example of the overall operation of computing system 102 in detecting various point of interest selection and ranking criteria and then surfacing points of interest based on the detected criteria. It is first assumed that user 112 has controlled map system 118 so that it is running on computing system 102. This is indicated by block 180 in the flow diagram of FIG. 2.

In one example, map display logic 127 is displaying a map display that is showing a map of some geographical location. This is indicated by block 182. Also, in one example, the map display has one or more display elements that indicate the user's route from a starting point to an ending point, or at least indicating the user's route on the map display being shown (e.g., if the zoom level is so high that the entire route is not shown, then only a portion may be shown). Showing a route indicator, such as a polyline, on the map display is indicated by block 184 in FIG. 2. The mapping system may be running in other ways as well, such as by showing user input mechanisms that can be used by user 112 to control the map display or map system 118, among other things. This is indicated by block 186.

Either map system 118 or point of interest system 120 then receives an input indicating that points of interest are to be displayed, or updated, on the map display. This is indicated by block 188. This may be, for instance, a user input 190 or an automated input 192, or another type of input 194. By way of example, the user may actuate a point of interest mechanism that indicates to point of interest system 120 that the user wishes to have various different types of points of interest displayed on the map display. In another example, the user may change the zoom level of the map display and this may be an automated input 192 to point of interest system 120 indicating that the displayed points of interest need to be refreshed or updated. For instance, if the user changes the zoom level to zoom out, it may be that more, fewer, or different points of interest are displayed than if the user controls the display to zoom in.

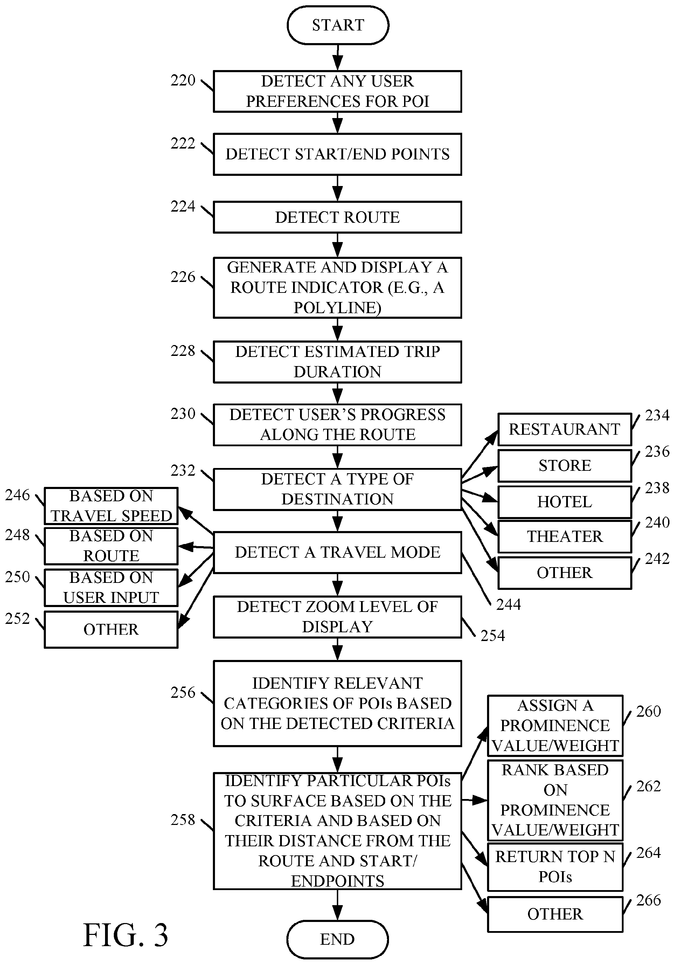

A set of point of interest selection/ranking criteria are then detected. In one example, they are detected by map system 118 and/or other items in computing system 102 and provided to point of interest system 120. In another example, they can be detected by point of interest system 120 instead, or in addition. They can be directly detected or they can be calculated based on a variety of sensor inputs from various sensors. Detection of some of the point of interest selection/ranking criteria is indicated by block 196 in FIG. 2, and some examples are described in greater detail below with respect to FIG. 3.

Category identifier/ranking logic 154 then identifies and ranks (or otherwise assigns a prominence value or weight to) point of interest categories 161 based upon the detected criteria. This is indicated by block 198 in FIG. 2. This can be done using a set of weighting heuristics or rules or using a static or dynamically updated weighting model, or otherwise. For instance, based upon the detected criteria, it may be that points of interest in the "hotels" category are weighted more heavily, or less heavily (or are given a higher or lower prominence value) than points of interest in the "state parks" category or in the "restaurants" category. When different criteria are detected, then the weight or prominence value assigned may be different.

Once the weights or prominence values are assigned to the various point of interest categories 161, then logic 154 ranks those categories in order, based upon the weight or prominence value assigned to them. This is also indicated by block 198 in FIG. 2.

Once the categories are weighted and ranked, then particular point of interest identifier/ranking logic 156 identifies and ranks (or assigns a prominence value to) particular points of interest in one or more of the top ranked categories. Assigning the value to particular points of interest and ranking them based on that value is indicated by block 200 in the flow diagram of FIG. 2. Again, this can be done using a set of weighting heuristics or using a static or dynamically updated weighting model, or otherwise.

By way of example, it may be that one of the detected criteria is that the user's destination is a theater. Therefore, the category of points of interests that includes coffee shops may be ranked relatively high, because it may be assumed or learned that the user prefers to visit a coffee shop, after attending the theater. In that case, it may be that particular coffee shops near the user's destination are ranked higher than those further from the user's destination. This is just one example of how individual or particular points of interest within a category may be weighted given the various criteria that are detected. Logic 156 then ranks the individual or particular points of interest, based upon those assigned weights or prominence values. This is also indicated by block 200.

Point of interest surfacing logic 158 then surfaces the identified, particular points of interest on the map display. This is indicated by block 202. For instance, it may be that logic 158 identifying information from data store 122 and provides that information for the top n ranked particular points of interest, in each of a number of different categories, to map system 118 so that map display logic 127 can display those points of interest on the map display that is currently being displayed. In another example, point of interest system 120, itself, controls user interface logic 124 to display the points of interest on the map display. The points of interest can be surfaced in other ways as well.

It will also be noted that the particular surfacing mechanism can surface information for each point of interest that can take a wide variety of different forms. For instance, it can be a descriptive link that describes or names the particular point of interest, and that can be actuated by user 112. When user 112 actuates the link, the user may be navigated to additional information about the point of interest, or that information may be displayed on a pop-up or other display. This is only one example, and a wide variety of other surfacing mechanisms can be used as well.

FIG. 3 is a flow diagram showing one example of the computing system detecting POI selection criteria and identifying relevant POI categories 161 and POIs 162 based on those criteria, in more detail. It thus corresponds to blocks 196, 198 and 200 in FIG. 2.

It is first worth noting that user 112 may, at some point, input preferences for various points of interest and point of interest categories. For instance, the user may provide preferences as to restaurants, coffee shops, barbers, pet groomers, grocery stores, etc. Thus, when point of interest system 120 is about to refresh or generate points of interest for display on the map display, it may first detect any user preferences for point of interest categories or particular points of interest within categories. This is indicated by block 220 in the flow diagram of FIG. 3.

Start/end point identifier logic 142 then identifies the starting and ending points (if it has not already done so) for the user's current trip. This assumes that the user is using the map system 118 to perform a guided navigation. In this type of scenario, map system 118 receives the user's start and end points and route determination logic 128 calculates and displays a route for the user to follow in order to arrive at the end point. Detecting the start and end points can be performed either by detecting a user input indicating them, or, at least partially automatically. For instance, it may be that the user 112 enters both the starting point and the ending point (by address, by geographic coordinates, by business name, or otherwise) into map system 118, and this is detected by start/end point identifier logic 142. In another example, the user may enter the end point (or destination), and logic 142 interacts with geographic location system 116 to obtain the start point as the user's current location. These and other ways of detecting the start/end points of the user's trip are indicated by block 222 in the flow diagram of FIG. 3.

Knowing the start and end points for the trip, route determination logic 128 then detects or otherwise identifies the user's route. In one example, it can identify multiple different routes and provide the user with the option to choose among them. In another example, it identifies only a single route, but allows the user to modify the route. Detecting the route in these and other ways is indicated by block 224 in the flow diagram of FIG. 3.

Polyline generator logic 130 then generates a polyline display and displays it on the map display, indicative of the user's route. Additional or different indications of the user's route can be generated and displayed as well. This is indicated by block 226 in the flow diagram of FIG. 3.

Trip duration identifier logic 134 then identifies or estimates a trip duration. This is indicated by block 228. For instance, if the user is driving on a freeway, logic 134 may access a traffic site that indicates current traffic conditions along the route, and estimate a speed at which the user may be traveling, and generate an estimated trip duration. In another example, trip duration identifier logic 134 revises the estimated trip duration, as the user moves along the route. These and other mechanisms can be used to detect an estimated trip duration.

As the user begins moving along the route, progress determination system 136 illustratively detects the user's progress along the route. This is indicated by block 230 in FIG. 3. For instance, progress identifier logic 144 can identify where the user is, along the route, based upon the start and end points identified by logic 142. Progress identifier logic 144 can generate a value indicative of that progress in a wide variety of different ways. For instance, if may indicate the amount of time that the user has been traveling, and the estimated trip duration remaining. It can generate a percentage value indicating what percent of the trip has already been covered and what percent remains. The percentage can be in terms of distance, time, etc.

Map use identifier system 138 then detects a variety of different criteria in order to identify how user 112 is currently using map system 118. For instance, destination identifier logic 150 illustratively detects a type or other characteristics of a destination that the user is going to, at the user's end point. This is indicated by block 232 in the flow diagram of FIG. 3. The characteristic or type of destination may be used in assigning prominence values or weights to points of interest that may be displayed to the user. The characteristic or type of destination can thus be any of a wide variety of different characteristics or types. In one example, the characteristic or type of destination may be a point of interest category that the destination falls into. Thus, it may be identified as a restaurant 234, a store 236, a hotel 238, a theater 240, or any of a wide variety of other types of destinations, indicating any of a wide variety of different types of characteristics that may be used to assign a prominence value or weight to points of interest, by point of interest system 120. This is indicated by block 242 in FIG. 3.

Travel mode identifier logic 148 can also detect a travel mode that the user is using, based on a variety of different, detected metrics or values. This is indicated by block 244. For instance, logic 148 can use system 116 or another system to detect a travel speed of the user 112 in progressing along the route. This may indicate whether the user is traveling by motor vehicle, on foot, by bicycle, etc. Determining the travel mode based on travel speed is indicated by block 246.

Logic 148 may interact with route determination logic 128 to identify the particular route that the user is taking, and this may be used to identify the travel mode. For instance, if the user is traveling along a bicycle route, or a biking path, this may indicate the travel mode. If the user is traveling along a combination pedestrian and bicycle path, this may be used in combination with the user's travel speed to identify whether the user is traveling on a bicycle, by foot, etc. If the user is traveling along a subway route, or another public transit route, (e.g., if the user is stopping at locations where a bus route stops) all of this route information may be used to identify that the user is traveling on a mass transit system. Identifying and outputting a value indicative of the travel mode based on the user's route is indicated by block 248.

User 112 may also provide an input indicating his or her travel mode. For instance, if travel mode identifier logic 148 is not able to unambiguously determine a travel mode, it may use user interface logic 124 to generate a user input mechanism that allows the user to input or confirm or otherwise select the user's travel mode. Determining the travel mode based on a user input is indicated by block 250.

Logic 148 may determine the user's travel mode in a wide variety of other ways as well. This is indicated by block 252.

Map display logic 127 may also identify the zoom level of the map display. This is indicated by block 254.

Some or all of these detected criteria may then be provided to point of interest system 120 (if they are not directly detected by system 120). Category identifier/ranking logic 154 can then identify the relevant point of interest categories 161 based upon any or all of the detected criteria. This is indicated by block 256. This can also be done in a variety of different ways. For instance, logic 154 may assign a prominence value or weight to a number of different categories 161, based upon the criteria detected, and then rank those categories based upon the assigned weight or prominence value. It may use a machine learned classification system, a set of heuristics or rules, a weighting model, or other mechanisms to identify the relevant point of interest categories as well.

Once the relevant categories are identified by logic 154, then particular point of interest identifier/ranking logic 156 identifies particular points of interest, in the relevant categories, to surface, based upon the criteria and based upon their distance from the route or end points in the user's travel. This is indicated by block 258. Again, this can take a wide variety of different forms. For instance, logic 156 can use the detected criteria to assign a prominence value or weight to each of a plurality of different particular points of interest in the relevant categories. This is indicated by block 260. In can then rank those particular points of interest based upon the prominence value or weight. This is indicated by block 262. It can then return the top n points of interest (where n is an integer that can be predefined, user configured, dynamically recalculated, or otherwise set) to map system 118, so that map display logic 127 can surface or display the points of interest on the map display. This is indicated by block 264. The particular points of interest can be identified in other ways as well, and this is indicated by block 266. By way of example, logic 156 can be a machine learned classification system, a set of heuristics or rules, a model, or any of a wide variety of other mechanisms for identifying the particular points of interest to surface.

It can thus be seen that the present description greatly enhances the accuracy and usability of the computing system in surfacing points of interest for a user. It not only determines a distance of a given point of interest from a user's route, but it also determines how the user is using the mapping system, and that use influences not only the particular points of interest to surface, but the categories of points of interest to be considered in surfacing information for the user.

By way of example, if user 112 is using the mapping system to navigate to a theater destination, a value indicative of this is generated. Then, it may be that heuristics determine that the point of interest category that includes coffee shops will be ranked higher than the point of interest category that includes hotels. If the user is using the mapping system for a guided walking navigation to a city park, it may be that the category of points of interest that includes gas stations will be ranked lower than the category of points of interest that includes restaurants. Similarly, it may be that if the user is scheduled to arrive at the destination around lunchtime, then restaurants around the destination may be ranked higher than those along the route. Further, if the user is ten minutes into a five hour trip, then certain categories and individual points of interest may be ranked higher than if the user is four hours and 40 minutes into a five hour trip. The progress value will indicate the user's progress in this way so it can be used in surfacing points of interest. For instance, if the user is about to arrive at a destination city after a long time, it may be that the category of points of interest that includes restaurants or hotels may be ranked higher than the category of points of interest that include theaters or city parks, etc.

It can thus be seen that the system not only considers how the user is using the map system (e.g., for a guided driving navigation, a guided walking navigation, a public transit navigation, etc.), but also the user's start point and end points, and progress along the route (such as how much of the route has been traversed by the user) and it also considers the destination (such as whether the destination is a hotel, a theater, a restaurant, etc.) and uses all that information in determining which categories of points of interest to surface for the user, and which particular points of interest, within those categories, to surface for the user.

The present discussion has mentioned processors and servers. In one embodiment, the processors and servers include computer processors with associated memory and timing circuitry, not separately shown. They are functional parts of the systems or devices to which they belong and are activated by, and facilitate the functionality of the other components or items in those systems.

Also, a number of user interface displays have been discussed. They can take a wide variety of different forms and can have a wide variety of different user actuatable input mechanisms disposed thereon. For instance, the user actuatable input mechanisms can be text boxes, check boxes, icons, links, drop-down menus, search boxes, etc. They can also be actuated in a wide variety of different ways. For instance, they can be actuated using a point and click device (such as a track ball or mouse). They can be actuated using hardware buttons, switches, a joystick or keyboard, thumb switches or thumb pads, etc. They can also be actuated using a virtual keyboard or other virtual actuators. In addition, where the screen on which they are displayed is a touch sensitive screen, they can be actuated using touch gestures. Also, where the device that displays them has speech recognition components, they can be actuated using speech commands.

It will be noted that the above discussion has described a variety of different systems, components and/or logic. It will be appreciated that such systems, components and/or logic can be comprised of hardware items (such as processors and associated memory, or other processing components, some of which are described below) that perform the functions associated with those systems, components and/or logic. In addition, the systems, components and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components and/or logic described above. Other structures can be used as well.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

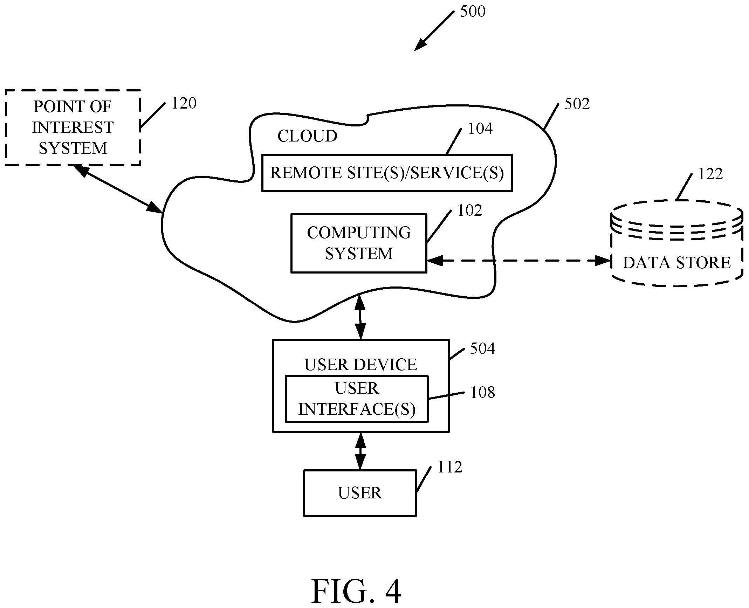

FIG. 4 is a block diagram of architecture 100, shown in FIG. 1, except that its elements are disposed in a cloud computing architecture 500. Cloud computing provides computation, software, data access, and storage services that do not require end-user knowledge of the physical location or configuration of the system that delivers the services. In various embodiments, cloud computing delivers the services over a wide area network, such as the internet, using appropriate protocols. For instance, cloud computing providers deliver applications over a wide area network and they can be accessed through a web browser or any other computing component. Software or components of architecture 100 as well as the corresponding data, can be stored on servers at a remote location. The computing resources in a cloud computing environment can be consolidated at a remote data center location or they can be dispersed. Cloud computing infrastructures can deliver services through shared data centers, even though they appear as a single point of access for the user. Thus, the components and functions described herein can be provided from a service provider at a remote location using a cloud computing architecture. Alternatively, they can be provided from a conventional server, or they can be installed on client devices directly, or in other ways.

The description is intended to include both public cloud computing and private cloud computing. Cloud computing (both public and private) provides substantially seamless pooling of resources, as well as a reduced need to manage and configure underlying hardware infrastructure.

A public cloud is managed by a vendor and typically supports multiple consumers using the same infrastructure. Also, a public cloud, as opposed to a private cloud, can free up the end users from managing the hardware. A private cloud may be managed by the organization itself and the infrastructure is typically not shared with other organizations. The organization still maintains the hardware to some extent, such as installations and repairs, etc.

In the example shown in FIG. 4, some items are similar to those shown in FIG. 1 and they are similarly numbered. FIG. 4 specifically shows that computing system 102 and remote sites/services 104 can be located in cloud 502 (which can be public, private, or a combination where portions are public while others are private). Therefore, user 112 uses a user device 504 that can include a client component of computing system 102 to access those systems through cloud 502.

FIG. 4 also depicts another example of a cloud architecture. FIG. 4 shows that it is also contemplated that some elements of computing system 102 can be disposed in cloud 502 while others are not. By way of example, data store122 can be disposed outside of cloud 502, and accessed through cloud 502. In another example, point of interest system 120 or other parts of computing system 102 can be outside of cloud 502. Regardless of where they are located, they can be accessed directly by device 504, through a network (either a wide area network or a local area network), they can be hosted at a remote site by a service, or they can be provided as a service through a cloud or accessed by a connection service that resides in the cloud. All of these architectures are contemplated herein.

It will also be noted that architecture 100, or portions of it, can be disposed on a wide variety of different devices. Some of those devices include servers, desktop computers, laptop computers, tablet computers, or other mobile devices, such as palm top computers, cell phones, smart phones, multimedia players, personal digital assistants, etc.

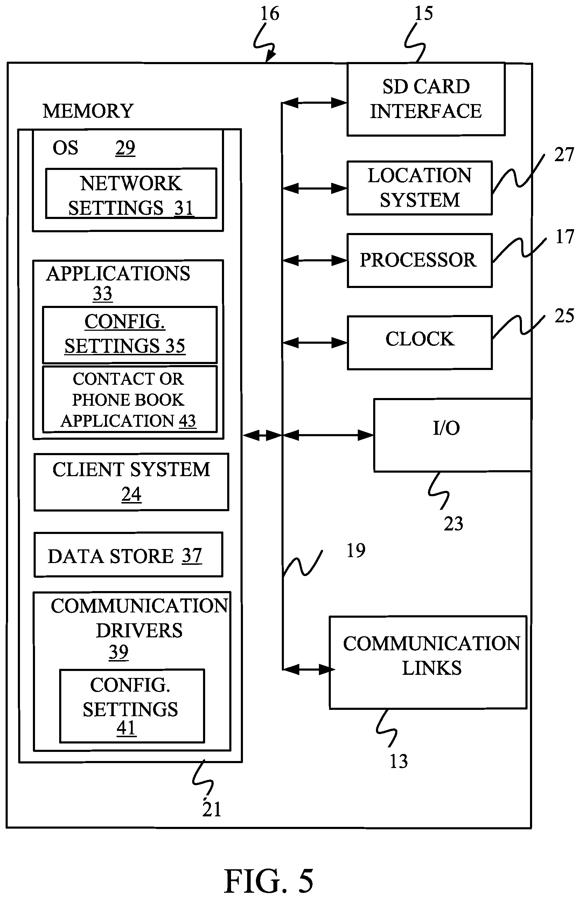

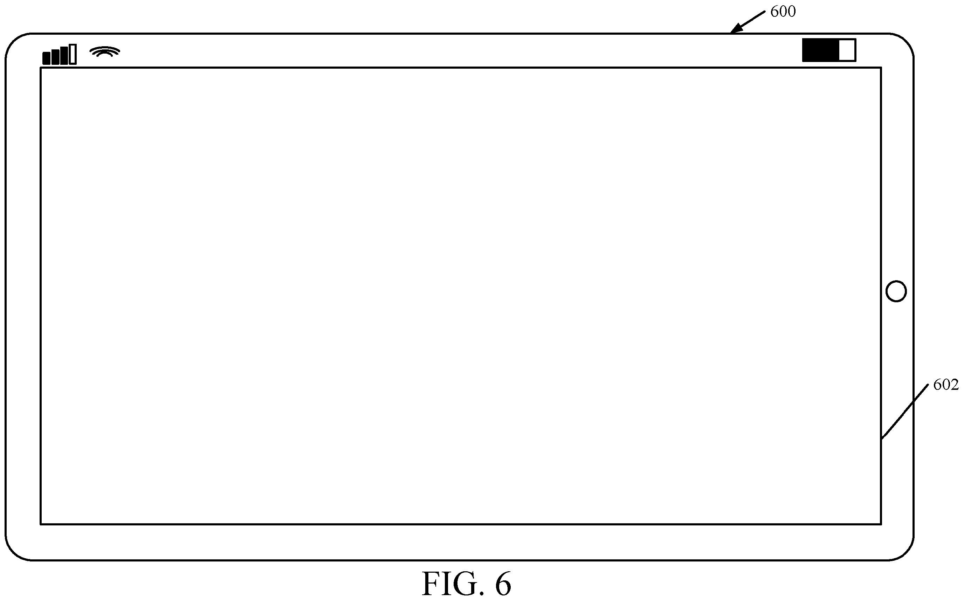

FIG. 5 is a simplified block diagram of one illustrative example of a handheld or mobile computing device that can be used as a user's or client's hand held device 16, in which the present system (or parts of it) can be deployed. FIGS. 6-7 are examples of handheld or mobile devices.

FIG. 5 provides a general block diagram of the components of a client device 16 that can run components of computing system 102 or that interacts with architecture 100, or both. In the device 16, a communications link 13 is provided that allows the handheld device to communicate with other computing devices and under some embodiments provides a channel for receiving information automatically, such as by scanning. Examples of communications link 13 include an infrared port, a serial/USB port, a cable network port such as an Ethernet port, and a wireless network port allowing communication though one or more communication protocols including General Packet Radio Service (GPRS), LTE, HSPA, HSPA+ and other 3G and 4G radio protocols, 1Xrtt, and Short Message Service, which are wireless services used to provide cellular access to a network, Wi-Fi protocols, and Bluetooth protocol, which provide local wireless connections to networks.

In other examples, applications or systems are received on a removable Secure Digital (SD) card that is connected to a SD card interface 15. SD card interface 15 and communication links 13 communicate with a processor 17 (which can also embody processors or servers 114from FIG. 1) along a bus 19 that is also connected to memory 21 and input/output (I/O) components 23, as well as clock 25 and location system 27.

I/O components 23, in one embodiment, are provided to facilitate input and output operations. I/O components 23 for various embodiments of the device 16 can include input components such as buttons, touch sensors, multi-touch sensors, optical or video sensors, voice sensors, touch screens, proximity sensors, microphones, tilt sensors, and gravity switches and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. It can also include computer storage media (described below). Memory 21 stores computer readable instructions that, when executed by processor 17, cause the processor to perform computer-implemented steps or functions according to the instructions. Similarly, device 16 can have a client system 24 which can run various business applications or embody parts or all of computing system 102. Processor 17 can be activated by other components to facilitate their functionality as well.

Examples of the network settings 31 include things such as proxy information, Internet connection information, and mappings. Application configuration settings 35 include settings that tailor the application for a specific enterprise or user. Communication configuration settings 41 provide parameters for communicating with other computers and include items such as GPRS parameters, SMS parameters, connection user names and passwords.

Applications 33 can be applications that have previously been stored on the device 16 or applications that are installed during use, although these can be part of operating system 29, or hosted external to device 16, as well.

FIG. 6 shows one embodiment in which device 16 is a tablet computer 600. In FIG. 6, computer 600 is shown with user interface display screen 602. Screen 602 can be a touch screen (so touch gestures from a user's finger can be used to interact with the application) or a pen-enabled interface that receives inputs from a pen or stylus. It can also use an on-screen virtual keyboard. Of course, it might also be attached to a keyboard or other user input device through a suitable attachment mechanism, such as a wireless link or USB port, for instance. Computer 600 can also illustratively receive voice inputs as well.

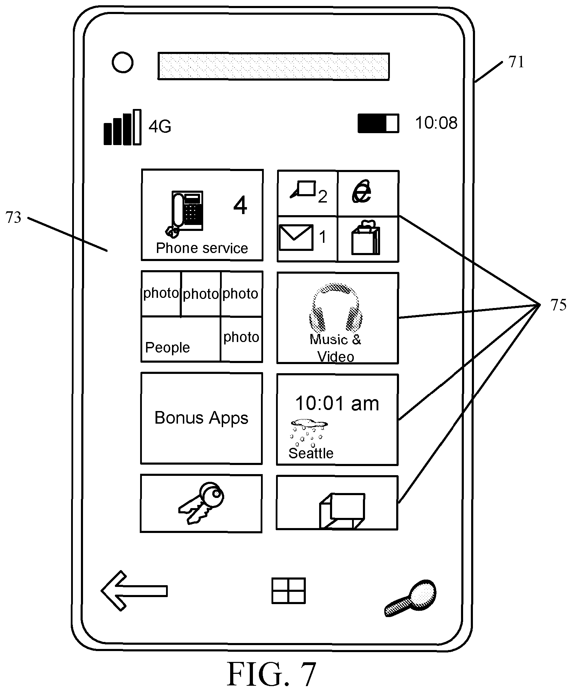

FIG. 7 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

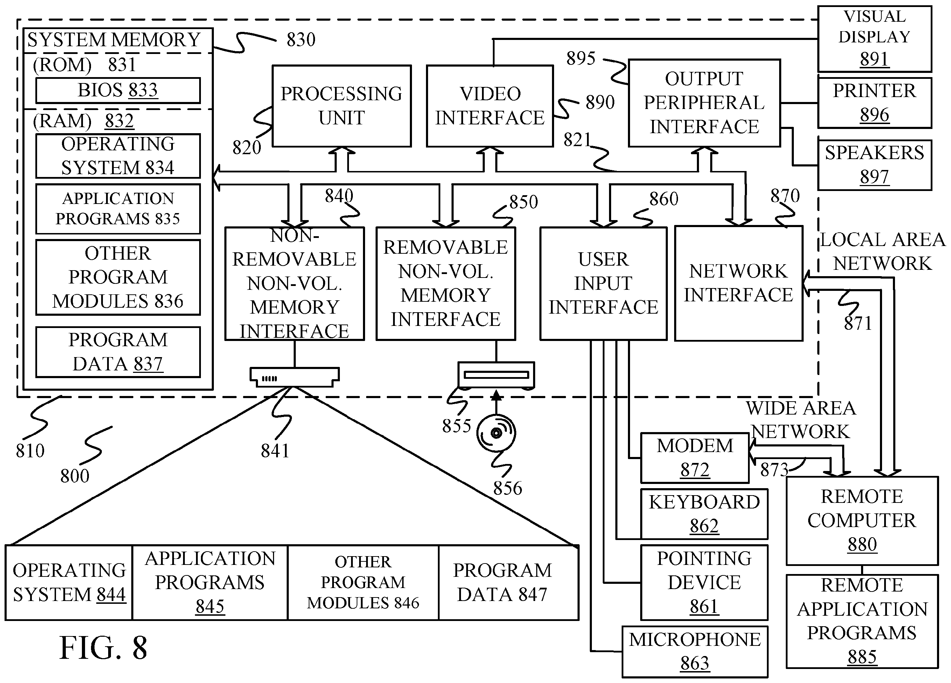

FIG. 8 is one example of a computing environment in which architecture 100, or parts of it, (for example) can be deployed. With reference to FIG. 8, an example system for implementing some embodiments includes a general-purpose computing device in the form of a computer 810. Components of computer 810 may include, but are not limited to, a processing unit 820 (which can comprise processors or servers 114 or others in other Figures), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus. Memory and programs described with respect to FIG. 1 can be deployed in corresponding portions of FIG. 8.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media typically embodies computer readable instructions, data structures, program modules or other data in a transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 8 illustrates operating system 834, application programs 835, other program modules 836, and program data 837.

The computer 810 may also include other removable/non-removable volatile/nonvolatile computer storage media. By way of example only, FIG. 8 illustrates a hard disk drive 841 that reads from or writes to non-removable, nonvolatile magnetic media, and an optical disk drive 855 that reads from or writes to a removable, nonvolatile optical disk 856 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The drives and their associated computer storage media discussed above and illustrated in FIG. 8, provide storage of computer readable instructions, data structures, program modules and other data for the computer 810. In FIG. 8, for example, hard disk drive 841 is illustrated as storing operating system 844, application programs 845, other program modules 846, and program data 847. Note that these components can either be the same as or different from operating system 834, application programs 835, other program modules 836, and program data 837. Operating system 844, application programs 845, other program modules 846, and program data 847 are given different numbers here to illustrate that, at a minimum, they are different copies.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures, such as a parallel port, game port or a universal serial bus (USB). A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections to one or more remote computers, such as a remote computer 880. The remote computer 880 may be a personal computer, a hand-held device, a server, a router, a network PC, a peer device or other common network node, and typically includes many or all of the elements described above relative to the computer 810. The logical connections depicted in FIG. 8 include a local area network (LAN) 871 and a wide area network (WAN) 873, but may also include other networks. Such networking environments are commonplace in offices, enterprise-wide computer networks, intranets and the Internet.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. The modem 872, which may be internal or external, may be connected to the system bus 821 via the user input interface 860, or other appropriate mechanism. In a networked environment, program modules depicted relative to the computer 810, or portions thereof, may be stored in the remote memory storage device. By way of example, and not limitation, FIG. 8 illustrates remote application programs 885 as residing on remote computer 880. It will be appreciated that the network connections shown are exemplary and other means of establishing a communications link between the computers may be used.

It should also be noted that the different embodiments described herein can be combined in different ways. That is, parts of one or more embodiments can be combined with parts of one or more other embodiments. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computing system, comprising:
route determination logic (128) that generates route information indicative of a geographic route;
map display logic (127) that generates a map display showing a map of a location and a route indicator indicative of the geographic route;
a map use identifier system (138) that detects a use characteristic indicative of how the map display is being used by a user (112) of the computing system (102); and
a point of interest (POI) system (120) that receives the use characteristic and the route information indicative of the geographic route and identifies a relevant POI category based on the use characteristic and the route information and a relevant POI, in the relevant POI category, based on the use characteristic and the route information and provides the relevant POI to the map display logic (127) for surfacing to the user (112).

2. The computing system of claim 1 wherein the POI system comprises: category identifier logic (154) that assigns a weight to each of a plurality of different POI categories, based on the use characteristic and the route information, and identifies the relevant POI category based on the assigned weights.

3. The computing system of claim 2 wherein the POI system comprises:
particular POI identifier logic (156) that assigns a weight to each of a plurality of POIs in the relevant POI category, based on the use characteristic and the route information, and identifies the relevant POI based on the assigned weights.

4. The computing system of claim 3 wherein the map use identifier system comprises:
travel mode identifier logic (148) configured to detect a travel mode of the user along the geographic route and generate, as the use characteristic, a travel mode indicator indicative of the identified travel mode.

5. The computing system of claim 4 wherein the map use identifier system comprises:
destination identifier logic (150) that identifies a characteristic of a destination of the user and generates, as the use characteristic, a destination characteristic value indicative of the characteristic of the destination.

6. The computing system of claim 5 and further comprising:
a progress determination system (136) configured to detect a progress of the user along the geographic route and generate a progress value indicative of the detected progress, the POI system identifying the relevant POI category and the relevant POI based on the progress value.

7. The computing system of claim 6 wherein the progress determination system comprises:
start/endpoint identifier logic (142) configured to identify a start point and an endpoint on the geographic route; and
progress identifier logic configured to identify the progress value based on a current location of the user, the start point, the end point and the geographic route.

8. The computing system of claim 7 and further comprising:
distance determination logic (132) configured to determine a distance of each of the plurality of POIs from the geographic route and generate a corresponding distance value for each of the plurality of POIs and to identify the relevant POI based on the corresponding distance value.

9. The computing system of claim 6 and further comprising:
trip duration identifier logic (134) configured to detect a remaining trip duration of the user based on the geographic route and the progress value and to generate a remaining trip duration value indicative of the remaining trip duration, the POI system identifying the relevant POI based on the trip duration value and the progress value.

10. A computer implemented method, comprising:
generating route information indicative of a geographic route;
generating (182) a map display showing a map of a location and a route indicator indicative of the geographic route;
detecting a use characteristic indicative of how the map display is being used by a user (112) of the computing system;
identifying (256, 258) a relevant point of interest (POI) category based on the use characteristic and the route information and a relevant POI, in the relevant category, based on the use characteristic and the route information; and
displaying (202) a display element indicative of the relevant POI on the map display.

11. The computer implemented method of claim 10 wherein identifying a relevant POI category comprises:
assigning a weight to each of a plurality of different POI categories, based on the use characteristic and the route information; and
identifying the relevant POI category based on the assigned weights.

12. The computer implemented method of claim 11 wherein identifying the relevant POI comprises:
assigning (260) a weight to each of a plurality of POIs in the relevant POI category, based on the use characteristic and the route information; and
identifying the relevant POI based on the assigned weights.

13. The computer implemented method of claim 12 wherein detecting a use characteristic comprises:
detecting (246, 248, 250, 252) a travel mode of the user along the geographic route; and
generating, as the use characteristic, a travel mode indicator indicative of the identified travel mode.

14. The computer implemented method of claim 13 wherein detecting a use characteristic comprises:
identifying a characteristic of a destination of the user; and
generating, as the use characteristic, a destination characteristic value indicative of the characteristic of the destination.

## Patentansprüche

1. Computersystem, umfassend:
Routenbestimmungslogik (128), die Routeninformationen generiert, die eine geographische Route anzeigen;
Kartenanzeigelogik (127), die eine Kartenanzeige generiert, die eine Karte eines Standortes und einen Routenindikator darstellt, der die geographische Route anzeigt;
ein Kartennutzungsidentifizierungssystem (138), das eine Nutzungscharakteristik erfasst, die anzeigt, wie die Kartenanzeige von einem Benutzer (112) des Computersystems (102) verwendet wird; und
ein POI-System (120) (Point of Interest), das die Nutzungscharakteristik und die Routeninformationen, welche die geografische Route anzeigen, empfängt und auf Basis der Nutzungscharakteristik und der Routeninformationen eine relevante POI-Kategorie und einen relevanten POI in der relevanten POI-Kategorie auf Basis der Nutzungscharakteristik und der Routeninformationen identifiziert und den relevanten POI der Kartenanzeigelogik (127) zum Einblenden für den Benutzer (112) bereitstellt.

2. Computersystem nach Anspruch 1, wobei das POI-System umfasst:
Kategorieidentifizierungslogik (154), die jeder einer Vielzahl von verschiedenen POI-Kategorien auf Basis der Nutzungscharakteristik und der Routeninformationen eine Gewichtung zuweist und die relevante POI-Kategorie auf Basis der zugewiesenen Gewichtungen identifiziert.

3. Computersystem nach Anspruch 2, wobei das POI-System umfasst:
spezielle POI-Identifizierungslogik (156), die jedem einer Vielzahl von POIs in der relevanten POI-Kategorie auf Basis der Nutzungscharakteristik und der Routeninformationen eine Gewichtung zuweist und den relevanten POI auf Basis der zugewiesenen Gewichtungen identifiziert.

4. Computersystem nach Anspruch 3, wobei das Kartennutzungsidentifizierungssystem umfasst:
Reisemodusidentifizierungslogik (148), die dazu konfiguriert ist, einen Reisemodus des Benutzers entlang der geographischen Route zu erfassen und als Nutzungscharakteristik einen Reisemodusindikator zu generieren, der den identifizierten Reisemodus anzeigt.

5. Computersystem nach Anspruch 4, wobei das Kartennutzungsidentifizierungssystem umfasst:
Zielidentifizierungslogik (150), die eine Charakteristik eines Ziels des Benutzers identifiziert und als Nutzungscharakteristik einen Zielmerkmalswert generiert, der die Charakteristik des Ziels anzeigt.

6. Computersystem nach Anspruch 5 und weiter umfassend:
ein Verlaufsbestimmungssystem (136), das dazu konfiguriert ist, einen Verlauf des Benutzers entlang der geografischen Route zu erfassen und einen Verlaufswert zu generieren, der den erfassten Verlauf anzeigt, wobei das POI-System die relevante POI-Kategorie und den relevanten POI auf Basis des Verlaufswertes identifiziert.

7. Computersystem nach Anspruch 6, wobei das Verlaufsbestimmungssystem umfasst:
eine Start-/Endpunktidentifizierungslogik (142), die dazu konfiguriert ist, einen Startpunkt und einen Endpunkt auf der geographischen Route zu identifizieren; und
Verlaufsidentifizierungslogik, die dazu konfiguriert ist, den Verlaufswert auf Basis eines aktuellen Standorts des Benutzers, des Startpunkts, des Endpunkts und der geografischen Route zu identifizieren.

8. Computersystem nach Anspruch 7 und weiter umfassend:
Entfernungsbestimmungslogik (132), die dazu konfiguriert ist, eine Entfernung jedes der Vielzahl von POIs von der geographischen Route zu bestimmen und einen entsprechenden Entfernungswert für jeden der Vielzahl von POIs zu generieren und den relevanten POI auf Basis des entsprechenden Entfernungswertes zu identifizieren.

9. Computersystem nach Anspruch 6 und weiter umfassend:
Reisedaueridentifizierungslogik (134), die dazu konfiguriert ist, eine verbleibende Reisedauer des Benutzers auf Basis der geographischen Route und des Verlaufswertes zu erfassen und einen Wert für die verbleibende Reisedauer zu generieren, der die verbleibende Reisedauer anzeigt, wobei das POI-System den relevanten POI auf Basis des Reisedauerwertes und des Verlaufswertes identifiziert.

10. Computerimplementiertes Verfahren, umfassend:
Generieren von Routeninformationen, die eine geographische Route anzeigen;
Generieren (182) einer Kartenanzeige, die eine Karte eines Standortes und einen Routenindikator zeigt, der die geographische Route anzeigt;
Erfassen einer Nutzungscharakteristik, die anzeigt, wie die Kartenanzeige von einem Benutzer (112) des Computersystems verwendet wird;
Identifizieren (256, 258) einer relevanten POI-Kategorie (Point of Interest) auf Basis der Nutzungscharakteristik und der Routeninformationen und eines relevanten POI in der relevanten Kategorie auf Basis der Nutzungscharakteristik und der Routeninformationen; und
Anzeigen (202) eines Anzeigeelements, das den relevanten POI auf der Kartenanzeige anzeigt.

11. Computerimplementiertes Verfahren nach Anspruch 10, wobei die Identifizierung einer relevanten POI-Kategorie umfasst:
Zuweisen einer Gewichtung zu jeder einer Vielzahl von verschiedenen POI-Kategorien, auf Basis der Nutzungscharakteristik und der Routeninformationen; und
Identifizieren der relevanten POI-Kategorie auf Basis der zugewiesenen Gewichtungen.

12. Computerimplementiertes Verfahren nach Anspruch 11, wobei die Identifizierung des relevanten POI umfasst:
Zuweisen (260) einer Gewichtung zu jeder einer Vielzahl von POIs in der relevanten POI-Kategorie, auf Basis der Nutzungscharakteristik und der Routeninformationen; und
Identifizieren des relevanten POI auf Basis der zugewiesenen Gewichtungen.

13. Computerimplementiertes Verfahren nach Anspruch 12, wobei die Erfassung einer Nutzungscharakteristik umfasst:
Erfassen (246, 248, 250, 252) eines Reisemodus des Benutzers entlang der geographischen Route; und
Generieren, als die Nutzungscharakteristik, eines Reisemodusindikators, der den identifizierten Reisemodus anzeigt.

14. Computerimplementiertes Verfahren nach Anspruch 13, wobei die Erfassung einer Nutzungscharakteristik umfasst:
Identifizieren einer Charakteristik eines Ziels des Benutzers; und
Generieren, als die Nutzungscharakteristik, eines Zielcharakteristikwertes, der die Charakteristik des Ziels anzeigt.

## Revendications

1. Système informatique, comprenant :
une logique de détermination d'itinéraire (128) qui génère des informations d'itinéraire indiquant un itinéraire géographique ;
une logique d'affichage de carte (127) qui génère un affichage de carte montrant une carte d'un emplacement et un indicateur d'itinéraire indiquant l'itinéraire géographique ;
un système identificateur d'utilisation de carte (138) qui détecte une caractéristique d'utilisation indiquant comment l'affichage de carte est utilisé par un utilisateur (112) du système informatique (102) ;
et
un système de point d'intérêt (POI) (120) qui reçoit la caractéristique d'utilisation et les informations d'itinéraire indiquant l'itinéraire géographique et identifie une catégorie de POI pertinente sur la base de la caractéristique d'utilisation et des informations d'itinéraire, et un POI pertinent, dans la catégorie de POI pertinente, sur la base de la caractéristique d'utilisation et des informations d'itinéraire et fournit le POI pertinent à la logique d'affichage de carte (127) pour transmettre à l'utilisateur (112).

2. Système informatique selon la revendication 1 dans lequel le système de POI comprend :
une logique d'identificateur de catégorie (154) qui affecte une pondération à chacune d'une pluralité de catégories de POI différentes, sur la base de la caractéristique d'utilisation et des informations d'itinéraire, et identifie la catégorie de POI pertinente sur la base des pondérations affectées.

3. Système informatique selon la revendication 2 dans lequel le système de POI comprend :
une logique d'identificateur de POI particulière (156) qui affecte une pondération à chacun d'une pluralité de POI dans la catégorie de POI pertinente, sur la base de la caractéristique d'utilisation et des informations d'itinéraire, et identifie le POI pertinent sur la base des pondérations affectées.

4. Système informatique selon la revendication 3 dans lequel le système d'identificateur d'utilisation de carte comprend :
une logique d'identificateur de mode de déplacement (148) configurée pour détecter un mode de déplacement de l'utilisateur le long de l'itinéraire géographique et générer, comme caractéristique d'utilisation, un indicateur de mode de déplacement indiquant le mode de déplacement identifié.

5. Système informatique selon la revendication 4 dans lequel le système d'identificateur de carte comprend :
une logique d'identificateur de destination (150) qui identifie une caractéristique d'une destination de l'utilisateur et génère, comme caractéristique d'utilisation, une valeur de caractéristique de destination indiquant la caractéristique de la destination.

6. Système informatique selon la revendication 5 et comprenant en outre :
un système de détermination de progression (136) configuré pour détecter une progression de l'utilisateur le long de l'itinéraire géographique et générer une valeur de progression indiquant la progression détectée, le système de POI identifiant la catégorie de POI pertinente et le POI pertinent sur la base de la valeur de progression.

7. Système informatique selon la revendication 6 dans lequel le système de détermination de progression comprend :
une logique d'identificateur de point de départ/arrivée (142) configurée pour identifier un point de départ et un point d'arrivée sur l'itinéraire géographique ; et
une logique d'identificateur de progression configurée pour identifier la valeur de progression sur la base d'un emplacement actuel de l'utilisateur, du point de départ, du point d'arrivée et de l'itinéraire géographique.

8. Système informatique selon la revendication 7 et comprenant en outre :
une logique de détermination de distance (132) configurée pour déterminer une distance de chacun de la pluralité de POI à partir de l'itinéraire géographique et générer une valeur de distance correspondante pour chacun de la pluralité de POI et pour identifier le POI pertinent sur la base de la valeur de distance correspondante.

9. Système informatique selon la revendication 6 et comprenant en outre :
une logique d'identificateur de durée de voyage (134) configurée pour détecter une durée de voyage restante de l'utilisateur sur la base de l'itinéraire géographique et de la valeur de progression et pour générer une valeur de durée de voyage restante indiquant la durée de voyage restante, le système de POI identifiant le POI pertinent sur la base de la valeur de durée de voyage et de la valeur de progression.

10. Procédé mis en œuvre par ordinateur, comprenant :
la génération d'informations d'itinéraire indiquant un itinéraire géographique ;
la génération (182) d'un affichage de carte montrant une carte d'un emplacement et un indicateur d'itinéraire indiquant l'itinéraire géographique ;
la détection d'une caractéristique d'utilisation indiquant comment l'affichage de carte est utilisé par un utilisateur (112) du système informatique ;
l'identification (256, 258) d'une catégorie de point d'intérêt (POI) pertinente sur la base de la caractéristique d'utilisation et des informations d'itinéraire et un POI pertinent, dans la catégorie pertinente, sur la base de la caractéristique d'utilisation et des informations d'itinéraire ; et
l'affichage (202) d'un élément d'affichage indiquant le POI pertinent sur l'affichage de carte.

11. Procédé mis en œuvre par ordinateur selon la revendication 10 dans lequel l'identification d'une catégorie de POI pertinente comprend :
l'affectation d'une pondération à chacune d'une pluralité de catégories de POI différentes, sur la base de la caractéristique d'utilisation et des informations d'itinéraire ; et
l'identification de la catégorie de POI pertinente sur la base des pondérations affectées.

12. Procédé mis en œuvre par ordinateur selon la revendication 11 dans lequel l'identification du POI pertinent comprend :
l'affectation (260) d'une pondération à chacun d'une pluralité de POI dans la catégorie de POI pertinente, sur la base de la caractéristique d'utilisation et des informations d'itinéraire ; et
l'identification du POI pertinent sur la base des pondérations affectées.

13. Procédé mis en œuvre par ordinateur selon la revendication 12 dans lequel la détection d'une caractéristique d'utilisation comprend :
la détection (246, 248, 250, 252) d'un mode de déplacement de l'utilisateur le long de l'itinéraire géographique ; et
la génération, comme caractéristique d'utilisation, d'un indicateur de mode de déplacement indiquant le mode de déplacement identifié.

14. Procédé mis en œuvre par ordinateur selon la revendication 13 dans lequel la détection d'une caractéristique d'utilisation comprend :
l'identification d'une caractéristique d'une destination de l'utilisateur ; et
la génération, comme caractéristique d'utilisation, d'une valeur de caractéristique de destination indiquant la caractéristique de la destination.
